# EUROPEAN PATENT SPECIFICATION

(11) **EP 1 255 414 B1**
(45) Date of publication and mention of the grant of the patent: **30.08.2006**
(21) Application number: 02253139.6
(22) Date of filing: 03.05.2002
(51) Int. Cl.: H04Q 7/22

(54) **Automatic SMS handling**
Automatische SMS Verarbeitung
Traitement automatique de SMS

(30) Priority: 04.05.2001 US 848339
(43) Date of publication of application: 06.11.2002
(73) Proprietor: Comverse Ltd, 69710 Tel-Aviv (IL)
(72) Inventor: Fostick, Gideon, Giva Shmuel 54422 (IL); Shmuelevitz, Fej Yuval, Tel Aviv 62333 (IL)
(74) Representative: Shackleton, Nicola

(56) References cited:
- WO-A-01/22751
- WO-A-02/33992
- WO-A-99/53699
- DE-A- 10 102 751
- US-A- 5 351 235
- US-A- 5 903 726
- US-A- 5 915 222
- US-A- 6 101 393

## Description

### FIELD AND BACKGROUND OF THE INVENTION

### BACKGROUND OF THE INVENTION

### Field of the Invention

The present invention relates to a system for allowing a recipient of Short Message Service (hereinafter "SMS") messages to set up one or more automatic replies. These replies may automatically be sent back to any party who sends the recipient an SMS message. The invention also provides a framework for a variety of other automatic handling processes of SMS, such as forwarding and automatic deletion.

### Description of the Related Art

The following terms are defined for background purposes.
- AHI: Automatic Handling Instruction
- ARM: Automatic Reply Message
- ARMS: Automatic Reply Message Server
- MR: Message Recipient, who may be an individual, enterprise, service, or any other entity, and is a user and/or subscriber of the system.
- MS: Message Sender, who may be an individual, enterprise, service, group, or any other entity.
- SAHS: SMS Automatic Handling Server
- SMS: Short Message Service
- SMSC: SMS Center

SMS (Short Message Service) is a service for sending small text messages of approximately 150 characters globally to other SMS enabled devices. It is supported by GSM and other mobile communications systems. SMS is similar to paging, however, delivery of SMS messages do not require the mobile phone to be active and within range, messages are held in SMS Centers until the phone is active and within range. In this way SMS offers guaranteed delivery of messages. SMS messages are transmitted within the same cell or to anyone with roaming service capability. They can also be sent to digital phones from a Web site equipped with PC Link or from one digital phone to another. Typical uses of SMS include interpersonal communication and notifying services to mobile phone owners. These notification services include message notifications related to arrival of voicemail, email and fax messages, and reminder services; email interworking (this refers to allowing SMS message to be converted and sent as e-mail and vice-versa); paging interworking; and information services such as weather reports, traffic reports, stock quotes, exchange rates etc.

Short Message Service (SMS) is rapidly becoming the messaging medium of choice for larger and larger segments of the public. It enables the sending of short text messages to wireless phones, and in this way it enables mobile phone users the benefits of limited functions from the worlds of paging, email and instant messaging.

The popularization of SMS has also introduced a new chapter in information overflow. An SMS user that may receive messages at any time and from any device certainly requires a competent management tool to manage these messages. Existing SMS services provide a means for forwarding messages to users, assuming that the message recipient is available to receive the message. No means is provided for the message sender to ascertain whether the recipient is actually available. A message sent to a non-available device, according to these existing SMS services, may be stored by the SMS Center until the receiver is available, at which time the message may be sent. This guarantees delivery, however, the delay that this may cause may make the message irrelevant and the delay is time-limited before the system must drop it. There are also limits on the number of messages that can be stored in this manner.

WO 99/53699 describes a system and procedure for implementing an answering machine wherein an answering server automatically answers calls and/or electronic mail depending on a setting which indicates whether certain numbers are to be connected to a given number or whether the call is to be answered with a short message.

US patent 3,351,235 describes a method for relaying information in an integrated services network using a short messaging service.

US patent 5,973,613 describes a pager device receiving paging messages. The user reads a paging message, selects one of a set of stored, predetermined reply messages, and transmits the selected reply message from the pager. The reply signal is received by one of a set of local cellular receivers, which sends the received signal to a computer for interpretation. The computer initiates an action based on interpretation of the received reply signal. This patent, however, refers to non-automatic replies.

US patent 6,185,603 describes a messaging system that uses the standard email subject line to control where a message gets delivered, when a message gets delivered and the appearance of a message when it gets delivered. This enables a company to use its standard intranet email system as a pseudo real-time messaging transport with a range of delivery options. Several codes control the features of the alerting message, and a predefined escape sequence for use by the sender is recognizable by a dedicated server. This escape sequence enables these codes. By placing the escape sequence in a predetermined location in each message, the sender indicates to the system that codes for controlling the features of the alerting message follow the escape sequence. Using these codes, the user can then specify when, how often and in what manner the alert message is displayed to the recipient in a window on the recipient's workstation. In addition, the sender can attain certain aspects of message routing and delivery using these codes. In addition, routing of the message within the network can be controlled by the sender in the same manner by specifying a particular routing within the subject line of the message following the escape sequence. This includes routing the message to a facsimile, a pager or a telephone, or voice mail system. This is in addition to the normal email address used in the message. This patent, however, does not offer automatic replies of incoming messages.

US 6,122,485 describes a system and method for confirming the receipt of a message by a messaging unit or pager. The system allows a caller to request page confirmation from the service provider. The system uses a caller identifier, entered by the caller at an input source, and a sequential index to store and locate data relating to the page confirmation request in a data structure. A page confirmation message is sent to the pager and the pager immediately sends a confirmation reply message back to service provider. At this point the service provider indicates in the data structure that the page was successful. At any time, the caller can then access the service provider to determine if his message was received by the pager. This patent, however, deals with receipt confirmation, and not automatically replying with true message content.

WO 01/22751 describes a method and system for transmitting a short message in a telecommunication system. Subscriber data is stored in a database (DB) and this data is compared to determine the routing information.

US Patent 5,915,222 describes a system for transmitting SMS messages. The system includes determining whether the message is associated with a service. If so, the message is forwarded to the identified Service Switching Point (SSP).

US Patent 6,101,393 describes a method and device for screening a short message to a mobile station within a telecommunications system thereby allowing the subscriber to accept or reject short messages depending on the originating entity.

Another related technology, from Novelsoft (http://www.novelsoft.ch/sms-center/e/techndet.html), enables easy implementation and operation of ones own SMS information services with very little effort. Accordingly, a customer is able to access his/her information service by sending a simple keyword via SMS to their server. A typical SMS information request occurs as follows: "your customer sends an SMS message with a specific keyword to our global SMS access number +41 79 4002030." However, this technology does not allow management of messages on individual access numbers or private phone numbers.

### Current Ericsson technology

(http://www.ericsson.com/review/2000 04/files/2000047.pdf\) offers SMS management possibilities. However this technology is a heavy, industrial grade system for information services such as SMS-based. It serves to highlight the value of easy, small-grades solutions for the small business/private subscriber. However it does not provide a simple and reasonable solution to SMS message management. In brief, Ericsson's solution allows one to buy a platform and provide SMS information services. This solution does not enable end users to configure their own services, on the service provider's platform (without buying their own platform), but using their own phone number (as opposed to say Novelsoft).

ICQ (www.icq.com) (Instant Messaging) has message management features that can be pre-configured to filter, reply etc. The ICQ software enables a user to instruct his or her desktop application to automatically reply to incoming messages, with customized response messages, such as, "taking a break for half an hour", "in a meeting" etc. In this way, ICQ has similar functionality to conventional e-mail applications (such as Outlook and Exchange). These functions are currently available for messages sent to smart end terminals, such as e-mail servers and ICQ terminals, which can implement auto-replies. This is opposed to SMS, that is designed for messages sent via a transparent medium to a stupid end terminal.

There is thus a widely recognized need for, and it would be highly advantageous to have, a system that can enable an improved management of SMS messages, and in particular to enabling automatic replies, forwarding and filtering of SMS messages.

### SUMMARY OF THE INVENTION

According to the present invention there is provided a system and method for enabling improved end user customized management of SMS messages. This system and method thereby extend the functionality and power of the SMS Center (hereinafter "SMSC) to incorporate email-type automatic replies, forwarding, filtering, saving and deleting of SMS messages on wireless handsets and other communication devices. This feature may be very useful for the following (and other) cases:
Automatic reply when the message receiver is unavailable (e.g., on vacation)
Auto reply when changing phone numbers
Other automatic-handling features include: Automatic SMS forwarding, and pre-configured automatic deletion of undelivered messages. Undelivered messages refer to messages that are kept in the hand-set, such as draft messages that have not yet been sent, or expired (time-limited) messages that are no longer relevant to send.

The present invention comprises the following components:
i. A Message Sender (MS), who initiates the sending of a SMS message;
ii. A Message Recipient (MR) who receives the message.
iii. SMS Automatic Handling Server (SAHS), for handling the message management for the message receiver. The MR sets up one or more Automatic Handling Instructions (AHI) on the SAHS.
iv. An Auto-Reply Message Server (ARMS) that allows a user to set up automated responses for incoming SMS messages. The ARMS has a database that stores ARM messages, and a server for serving Auto-Reply Messages to the SMS Center. The MR sets up one or more Auto-Reply Messages (ARM) on the ARMS.
v. A SMS Center (SMSC) for managing the sending and replying processes. The SAHS and/or the ARMS may be part of the SMS Center.
The present invention includes a method of managing SMS messages according to claim 1, and the corresponding System according to claim 16. Further aspects of the present invention include automatically replying to SMS messages.

A further preferred embodiment of the present invention is a system for setting up a plurality of automated replies by users, such that a message receiver can configure the system to respond to specific types of incoming messages, in his/her chosen ways.

Another preferred embodiment of the present invention is a system for setting up at least one alternative handling instruction, for enabling a user to automatically configure the system to respond to incoming messages by filtering, saving, filing, deleting etc. such messages.

### BRIEF DESCRIPTION OF THE DRAWINGS

The invention is herein described, by way of example only, with reference to the accompanying drawings, wherein:
FIGURE 1 is a block diagram showing an embodiment of the invention.
FIGURE 2 is a flowchart for describing an embodiment of the invention.

### DESCRIPTION OF THE PREFERRED EMBODIMENT

The present invention relates to a system and method for better enabling users to manage SMS messages, by automating SMS message manipulation from the receiver side.

Specifically, the present invention can be used to automatically manage SMS messages from multiple sources. This includes a mechanism for easily replying, forwarding, deleting, filtering and saving these messages.

The following description is presented to enable one of ordinary skill in the art to make and use the invention as provided in the context of a particular application and its requirements. Various modifications to the preferred embodiment will be apparent to those with skill in the art, and the general principles defined herein may be applied to other embodiments. Therefore, the present invention is not intended to be limited to the particular embodiments shown and described, but is to be accorded the widest scope consistent with the principles and novel features herein disclosed.

The principles and operation of a system and a method according to the present invention may be better understood with reference to the drawings and the accompanying description, it being understood that these drawings are given for illustrative purposes only and are not meant to be limiting, wherein:

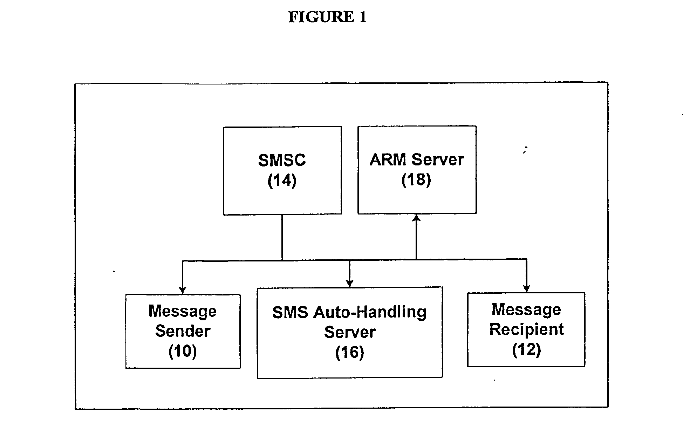

In Figure 1, a Message Sender (MS) or initiator (**10**), sends an SMS message from a sending device to a Message Recipient (MR) (**12**), who receives the message on a receiving device. The aforementioned devices may be any communications devices, including a PC, notebook, handheld computer, wearable computer, wireless phone, SMS-enabled device, etc.
An MR (**12**) sets up one or more Automatic Reply Messages (ARM) on an Automatic Reply Messages Server (ARMS) (18), and/or sets up other Automatic Handling Instructions (AHI) on an SMS Automatic Handling Server (SAHS) (**16**). These may include instructions to delete, forward, filter, and save chosen messages. The SMS sending and replying processes are managed by an SMS Center (SMSC) (**14**). ARMS (**18**) and SAHS (**16**) are components that may be located internally or externally to an SMSC (**14**). The ARMS (**18**) and SAHS (**16**) may be located as separate entities, or as a separate single entity. The ARMS (**18**) may alternatively be a part of the present invention, without the SAHS (**16**), and likewise the SAHS (**16**) may alternatively be a part of the present invention, without the ARMS (**18**). In order for the present invention to be operational, further development is required in an SMSC (**14**), in order to configure an SMSC to relay and receive messages to and from an ARMS (**18**) and/or SAHS (**16**). As is known in the art, an SMSC (**14**) transfers messages "transparently", i.e. passes the messages on without any special treatment. According to the present invention, an SMSC (**14**) is required to process each message and query whether an ARM is set up, in which case an SMSC (**14**) initiates the auto-reply process. Likewise, an SMSC queries whether there is an AHI, and acts accordingly. In addition to these developments in an SMSC (**14**), the addition to the current system of an SAHS (**16**) and an ARMS (**18**) are innovations that add significant functionality to the current SMS system. The setup of the SMSC (**14**) incorporates a conventional means for routing SMS messages to an Application Server, known by those skilled in the art. This is a standard procedure, done with all MO-to-Application messages (Mobile Originated messages sent to external Applications). Accordingly, the MR (**12**) is provisioned in the SMSC (**14**) (or in a database accessible by the SMSC) to have his or her messages routed to the ARMS server (**18**). The SMSC (**14**) simply routes the messages to the ARMS (**18**), based on the provisioned information.

### The Process

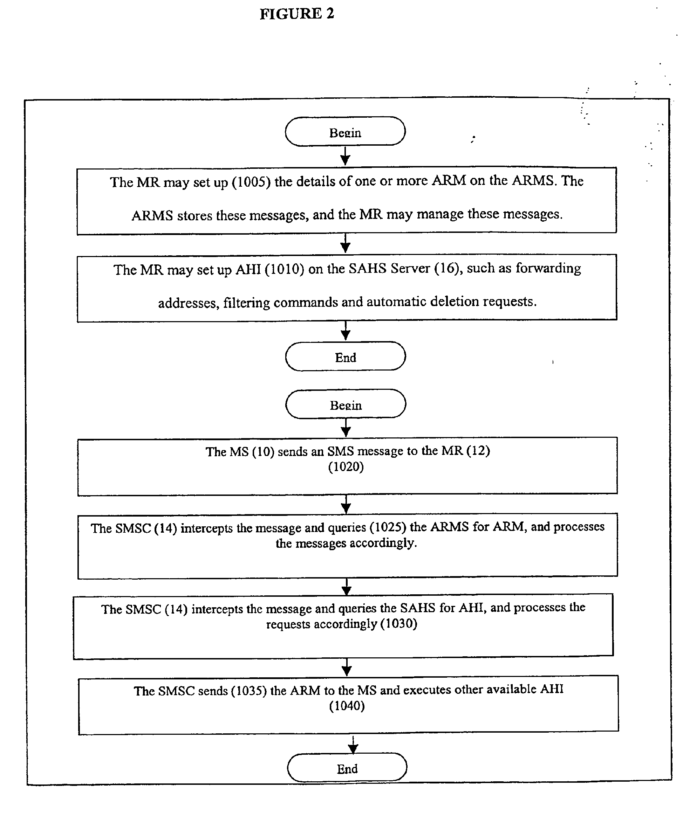

The flowchart in figure 2 describes the process of the invention.
An MR (**12**) sets up (**1005**) one or more automated response messages (ARM) on an ARMS. The ARMS stores all the user messages, and optionally stores all the messages for each single user under his/her unique user profile. The MR sets up such ARMs either using a Web-based interface, wherein the interface is a simple HTML or other Web format form allowing an MR (**12**) to enter and confirm the ARM, or by sending at least one SMS message to the ARMS (**18**). A message might say, for example, that "I'm on vacation for the week, contact me May 1st", and the MR would send it to the phone number associated with the ARMS (**18**), e.g. +97254-4-REPLIES. Thus the MR (**12**) sets up the ARM. An additional empty message to the same number would cancel the ARM. An ARMS (18) may be either a standalone server or part of an SMSC (**14**).

The MS (**10**) sends an SMS message to the MR (**12**) (**1020**), via an SMS Center (**14**). The SMSC (**14**) intercepts the message and queries (**1025**) the ARMS for ARMs, and processes the messages accordingly. If there is no ARM, the message is sent directly to the MR (**12**). If there is one ARM, the ARM is sent to the SMSC (**14**). The SMSC (**14**) sends the ARM, and optionally the original message, to the MS (**10**).
A message sent to the MR (**12**) that causes the system to send one or more reply messages (ARMs) is referred to as a "trigger message". If there are multiple ARMs, each ARM is assigned a unique or single "key". Optionally a single key can enable triggering of several reply messages, such as in the case where a long message is broken up into a series of SMS messages. These keys correlate reply messages (ARMs) with trigger messages. In other words, the keys identify trigger messages and the ARMs that are to be sent in response to these trigger messages. One or more ARMs can be sent in reply to a single trigger message. This correlation is preferably accomplished by storing triggering text or data, as well as the reply message, in a key data structure, such as a table. The ARMS (**18**) looks up the trigger in such a table in order to find the corresponding ARM(s). Upon finding one or more matching key data structures, the ARMS (**18**) extracts the ARM(s) from the matching key data structure(s) and forwards the ARM(s) to the SMSC(**14**). For instance, the key "w" may cause an ARM describing the weather to be sent, and the key "n" may cause an ARM describing the news to be sent. In both these cases, the text of the ARM is currently predetermined by the MR (**12**).

These responses and keys are created and managed by a receiver/user of a SMS enabled wireless handset, by a Web-based HTML (or other format type) form allowing the entry of several pairs of keys and associated messages, or by sending SMS messages to an ARMS (**18**) (e.g. "key w reply Cloudy" and "key n reply Peace talks stalled"). The relevant software for running an ARMS (18) and SAHS (**16**) is located on a mobile server, and therefore is not a requirement for the client device. The software provides a mechanism to enable multiple users to set up and manage multiple accounts/mailboxes/keys. For example, it enables a user to set up, change, or delete ARM messages. An MR (**12**) may choose whether to configure an ARMS (**18**) to send the original message to the MR (**12**) when the MR (**12**) is available. The system of the present invention enables the configuring of different preferences for different MRs on the same system. An ARMS (**18**) may also be set up as a part of an SMSC (**14**). The ARMS (**18**) elects the appropriate ARM and returns both the chosen ARM and the original message back to the SMSC (**14**). The SMSC (14) sends the chosen ARM, and optionally the original message, to the MS (**10**).

An ARMS (**18**) receives one or more ARMs from an MR (**12**) by some interface (e.g. those described above) and places the ARM in a list or database. The list describes the ARM message (or messages, each message associated with a key) associated with each MR phone number who is using the service. An ARMS (**18**) can receive ARM update change requests (replace the old message associated with an MR (**12**) with a new message) or delete requests (remove the ARM associated with an MR (12) phone number). An ARMS (**18**) may answer to queries from an SAHS (**16**). A query is of the form "what is the ARM associated with phone number XXX, triggered by key KKK" and the ARM responds either with the appropriate ARM or with a message signifying "There is no ARM for that number". This software is developed by standard software tools such as Java and Oracle database software, and can reasonably be developed by one skilled in the art. An MR (12) may manage the messages in an ARMS (**18**), by means such as canceling an ARM, by a similar process as that described above.

In a further embodiment of the present invention, an MR (**12**) sets up alternative handling instructions (AHI) (1010) on an SAHS (**16**), as can be seen in figure 2. These AHI (**1010**) may include, for instance, forwarding the received SMS messages to another address, deletion of the accumulated undelivered messages (due to the MR being unavailable to the network or having a full inbox on the handset) in an SMSC (**14**), saving particular messages in personalized folders (such as saving all messages from a superior in a folder marked "urgent"), filtering instructions about which SMS messages to accept, which to reject and what to do with them (for example, rejecting all SMS messages that are 3 days old, or all SMS messages from a particular source) etc. An SAHS (**16**) may also be set up as a part of an SMSC (**14**), or may be implemented jointly with an ARMS (**18**), in a common software element. According to this embodiment, once an MR (**12**) has set up his or her personal preferences, via a web-based provisioning interface, for example, on an SAHS (16), the SMS messaging process is executed as follows: An MS (**10**) sends an SMS message to an MR (**12**) (**1020**). In the cases where the MR (**12**) is not available, or chooses to filter incoming messages, the SMSC (**14**) intercepts the message and queries (**1030**) an SAHS (**16**) to determine whether there is an
Alternative Handling Instruction (AHI). If there is no AHI, the SMSC (**14**) passes on the message directly to the MR (12). If there is one ARI, the SAHS (**16**) sends that AHI to the SMSC (**14**). If there is more than one AHI, the SMSC (**14**) sends the ARMS (**18**) the original message sent by the MS (**10**) (**1035**), and the ARMS (**18**) uses the message contents as a key to choose the appropriate AHI (**1040**), and subsequently returns the appropriate AHI to the SMSC (**14**). The service, for example, may be limited to human MS. In this example, only Mobile-Originated SMS messages may receive the auto-reply, while machine-originated SMS messages (such as voicemail notification messages) may not receive an Auto-reply. Messages are commonly identifiable by the originating phone number, which is thus utilized for filtering purposes. In this and other ways, subscribers may manage and filter SMS messages, according to pre-configured personalized alternative handling instructions. The SMSC (**14**) executes the AHI accordingly. Examples of such executions include customized forwarding of messages to individuals and/or groups, deleting messages, storing messages and filtering messages according to chosen criteria. The SMSC (**14**) may or may not send the original message to the MR (**12**), depending on the setup of the AHIs and/or ARMs.

### Advantages of the Invention

The Auto-reply service according to the present invention allows an MR (**12**) to easily and automatically inform an MS (**10**) that the MR is unavailable, and in this case to automatically inform the MS (**10**) how to alternatively contact the MR (**12**). This could be useful, for example, to inform an MS (**10**) that an MR **(12**) is on vacation, that an MR (**12**) has discontinued the use of the mobile phone service, or has moved to a new mobile telephone number, or is available on a regular phone, via email or instant messaging etc. Furthermore, this service enables SMS users to manage, store, automatically delete, reply and forward SMS messages, by means of an interface with control options, similarly to that of common email interfaces that enable users to configure their email rules. The service also allows SMS subscribers to simply and easily set up one or more messages that will constitute an information provision service. For instance, sending "w" will give back the current weather forecast in response, and sending "n" will give back the news.

The AHI framework provides an MR with additional functionality such as SMS forwarding to an MR's (**12**) new mobile number, and deletion of unsent SMS messages that have accumulated on an SMSC (**14**), e.g. as a result of extended unavailability of an MR (12).

### ADVANTAGES OF THE PRESENT INVENTION

The present invention is innovative in extending the functionality of SMS without changing the end-user hardware or software. The proprietary software components of the present invention reside on an SMSC (**14**), SAHS (**16**) and ARMS (**18**), and are transparent to the end user. The present invention easily allows a user to set up an interactive and manageable SMS-based information service.

### ALTERNATE EMBODIMENTS

Several other embodiments are contemplated by the inventors. For example, a system enabling users to automatically delete certain messages from the server, or forward messages to other (voice-based) devices. A system may also be provided for enabling users to configure SMS replies for group SMS messages. A system may also be provided for enabling customized storage and filing of SMS messages. These alternative embodiments are executable using the customized programming facilities of the SAHS, whereby a user sets up pre-configured rules and preferences.

The foregoing description of the embodiments of the invention has been presented for the purposes of illustration and description. It is not intended to be exhaustive or to limit the invention to the precise form disclosed. It should be appreciated that many modifications and variations are possible in light of the above teaching. It is intended that the scope of the invention be limited not by this detailed description, but rather by the claims appended hereto.

## Claims

1. A method of managing Short Message Service 〈*SMS*〉 messages including the steps of identifying an SMS message for a Message Recipient 〈*MR*〉 (12), determining whether the MR (12) has set up at least one alternative handling instruction for SMS messages; and if it is determined that the MR (12) has set up an alternative handling instruction for SMS messages, then executing the alternative handling instruction, the method **characterized in that** the at least one alternative handling instruction includes a saving instruction for saving SMS messages in a personalized folder for the MR (12).

2. The method of Claim 1, wherein the at least one alternative handling instruction additionally includes at least one of a filtering instruction for filtering SMS messages identified for the MR (12) according to a predetermined criteria; a forwarding instruction for forwarding an SMS message identified for the MR (12) to an additional address; and a deletion instruction for deleting SMS messages according to a predetermined criteria.

3. The method of Claim 2, wherein the at least one alternative handling instruction includes a filtering instruction specifying a predetermined criteria by which SMS messages identified for the MR (12) are to be rejected.

4. The method of Claim 2, wherein said filtering instruction rejects SMS messages that are older than a predetermined amount of time.

5. The method of Claim 1, wherein the at least one alternative handling instruction includes a forwarding instruction for forwarding a received SMS message to a plurality of different addresses.

6. The method of Claim 1, wherein the personalized folder is a folder identified for saving urgent SMS messages.

7. The method of Claim 1, wherein the at least one alternative handling instruction includes a deletion instruction for deleting undelivered SMS messages.

8. The method of Claim 7, wherein undelivered SMS messages are deleted after expiration of a predetermined amount of time.

9. The method of Claim 1 or Claim 2, wherein there are a plurality of alternative handling instructions set up for the MR (12), and wherein a content of the SMS message is used to select the appropriate alternative handling instruction from the plurality of alternative handling instructions.

10. The method of Claim 1, wherein the at least one alternative handling instruction is set up via a form on a web-based provisioning interface.

11. The method of Claim 1, wherein the at least one alternative handling instruction is set up via an SMS message.

12. The method of Claim 1, further comprising determining whether the MR (12) has set up at least one AutoReply Message for the MR (12).

13. The method of Claim 12, wherein there are a plurality of AutoReply Messages set up for the MR (12), and wherein the SMS message is used as a key to select an appropriate AutoReply Message.

14. The method of Claim 13, wherein a content of the SMS message is used as the key to select the appropriate AutoReply Message from the plurality of AutoReply Messages.

15. The method of Claim 13, wherein the appropriate AutoReply Message is selected in accordance with whether the SMS message is one of a Mobile-Originated SMS message and a machine originated SMS message.

16. A system for managing Short Message Service 〈SMS〉 messages including a module for identifying an SMS message for a Message Recipient 〈MR〉 (12), a module for determining whether the MR (12) has set up an alternative handling instruction for SMS messages; and if said module determines that the MR (12) has set up an alternative handling instruction for SMS messages, then said module is adapted to execute the alternative handling instruction, the system **characterized in that** the at least one alternative handling instruction includes a saving instruction for saving SMS messages in a personalized folder for the MR (12).

17. The system of Claim 16, wherein the at least one alternative handling instruction additionally includes at least one of: a filtering instruction for filtering SMS messages identified for the MR (12) according to a predetermined criteria; a forwarding instruction for forwarding an SMS message identified for the MR (12) to an additional address; and a deletion instruction for deleting SMS messages according to a predetermined criteria.

18. The system of Claim 17, wherein the at least one alternative handling instruction includes a filtering instruction specifying a predetermined criteria by which SMS messages identified for the MR (12) are to be rejected.

19. The system of Claim 18, wherein said filtering instruction rejects SMS messages that are older than a predetermined amount of time.

20. The system of Claim 16 or Claim 17, wherein the at least one alternative handling instruction includes a forwarding instruction for forwarding a received SMS message to a plurality of different addresses.

21. The system of Claim 16, wherein the personalized folder is a folder identified for saving urgent SMS messages.

22. The system of Claim 17, wherein the at least one alternative handling instruction includes a deletion instruction for deleting undelivered SMS messages.

23. The system of Claim 22, wherein undelivered SMS messages are deleted after expiration of a predetermined amount of time.

24. The system of Claim 17, wherein there are a plurality of alternative handling instructions set up for the MR (12), and wherein a content of the SMS message is used to select the appropriate alternative handling instruction from a plurality of alternative handling instructions.

25. The system of Claim 16, wherein the at least one alternative handling instruction is set up via a form on a web-based provisioning interface.

26. The system of Claim 16, wherein the at least one alternative handling instruction is set up via an SMS message transmitted from a mobile communication device.

27. The system of Claim 16, further comprising a module for determining whether the MR (12) has set up at least one AutoReply Message for the MR (12).

28. The system of Claim 27, wherein there are a plurality of AutoReply Messages set up for the MR (12), and wherein the SMS message is used as a key to select an appropriate AutoReply Message from the plurality of AutoReply Messages.

29. The system of Claim 28, wherein a content of the SMS message is used as the key to select the appropriate AutoReply Message from the plurality of AutoReply Messages.

30. The system of Claim 29, wherein the appropriate AutoReply Message is selected in accordance with whether the SMS message is one of a Mobile-Originated SMS message and a machine originated SMS message.

## Patentansprüche

1. Verfahren zum Handhaben von Kurznachrichtendienst [SMS-]Nachrichten, umfassend die Schritte: Identifizieren einer SMS-Nachricht für einen Nachrichtenempfänger <MR> (12), Bestimmen, ob der MR (1 2) mindestens einen Alternativ-Abwicklungsbefehl für SMS-Nachrichten eingerichtet hat, und, wenn festgestellt wird, daß der MR (12) einen Alternativ-Abwicklungsbefehl für SMS-Nachrichten eingerichtet hat, Ausführen des Alternativ-Abwicklungsbefehls, **dadurch gekennzeichnet, daß** der mindestens eine Alternativ-Abwicklungsbefehl einen Sicherungsbefehl zum Sichern von SMS-Nachrichten in einem personalisierten Ordner für den MR (12) enthält.

2. Verfahren nach Anspruch 1, bei dem der mindestens eine Alternativ-Abwicklungsbefehl zusätzlich mindestens einen der folgenden Befehle enthält: einen Filterbefehl zum Filtern von SMS-Nachrichten, die für den MR (1 2) gemäß einem vorbestimmten Kriterium identifiziert werden; einen Weiterleitbefehl zum Weiterleiten einer für den MR (12) identifizierten SMS-Nachricht an eine zusätzliche Adresse; und einen Löschbefehl zum Löschen von SMS-Nachrichten nach Maßgabe eines vorbestimmten Kriteriums.

3. Verfahren nach Anspruch 2, bei dem der mindestens eine Alternativ-Abwicklungsbefehl einen Filterbefehl enthält, der ein vorbestimmtes Kriterium spezifiziert, gemäß dem SMS-Nachrichten, die für den MR (12) identifiziert sind, zurückzuweisen sind.

4. Verfahren nach Anspruch 2, bei dem der Filterbefehl SMS-Nachrichten zurückweist, die älter als eine vorbestimmte Zeitspanne sind.

5. Verfahren nach Anspruch 1, bei dem der mindestens eine Alternativ-Abwicklungsbefehl ein Weiterleitbefehl zum Weiterleiten einer empfangenen SMS-Nachricht zu einer Mehrzahl verschiedener Adressen beinhaltet.

6. Verfahren nach Anspruch 1, bei dem der personalisierte Ordner ein zum Sichern dringender SMS-Nachrichten identifizierter Ordner ist.

7. Verfahren nach Anspruch 1, bei dem der mindestens eine Alternativ-Abwicklungsbefehl einen Löschbefehl zum Löschen nicht zugestellter SMS-Nachrichten enthält.

8. Verfahren nach Anspruch 7, bei dem nicht zugestellte SMS-Nachrichten nach Ablauf einer vorbestimmten Zeitspanne gelöscht werden.

9. Verfahren nach Anspruch 1 oder Anspruch 2, bei dem es eine Mehrzahl von Alternativ-Abwicklungsbefehlen gibt, eingerichtet für den MR (12), und wobei ein Inhalt der SMS-Nachricht dazu dient, den passenden Alternativ-Abwicklungsbefehl aus den mehreren Alternativ-Abwicklungsbefehlen auszuwählen.

10. Verfahren nach Anspruch 1, bei dem der mindestens eine Alternativ-Abwicklungsbefehl über eine Eingabemaske einer web-Schnittstelle eingereichtet wird.

11. Verfahren nach Anspruch 1, bei dem der mindestens eine Alternativ-Abwicklungsbefehl über eine SMS-Nachricht eingerichtet wird.

12. Verfahren nach Anspruch 1, weiterhin umfassend das Betimmen, ob der MR (12) mindestens eine AutoReply-Nachricht für den MR (12) eingerichtet hat.

13. Verfahren nach Anspruch 12, bei dem es eine Mehrzahl von AutoReply-Nachrichten gibt, die für den MR (12) eingerichtet sind, wobei die SMS-Nachricht als Schlüssel zur Auswahl einer passenden AutoReply-Nachricht dient.

14. Verfahren nach Anspruch 13, bei dem ein Inhalt der SMS-Nachricht als Schlüssel zum Auswählen der passenden AutoReply-Nachricht aus den mehreren AutoReply-Nachrichten dient.

15. Verfahren nach Anspruch 13, bei dem die passende AutoReply-Nachricht nach Maßgabe des Umstands ausgewählt wird, ob es sich bei der SMS-Nachricht um eine von einer mobilen Quelle stammende SMS-Nachricht oder eine maschinell erzeugte SMS-Nachricht handelt.

16. System zum Handhaben von Kurznachrichtendienst-[SMS-]Nachrichten, enthaltend ein Modul zum Identifizieren einer SMS-Nachricht für einen Nachrichtenempfänger <MR>(12), ein Modul zum Bestimmen, ob der MR (12) einen Alternativ-Abwicklungsbefehl für SMS-Nachrichten eingerichtet hat; und, falls das Modul feststellt, daß der MR (12) einen Alternativ-Abwicklungsbefehl für SMS-Nachrichten eingerichtet hat, das Modul den Alternativ-Abwicklungsbefehl anschließend auszuführen ausgebildet ist, wobei das System **dadurch gekennzeichnet ist, daß** der mindestens eine Alternativ-Abwicklungsbefehl einen Sicherungsbefehl zum Sichern von SMS-Nachrichten in einem personalisierten Ordner für den MR (1 2) enthält.

17. System nach Anspruch 16, bei dem der mindestens eine Alternativ-Abwicklungsbefehl zusätzlich mindestens einen der folgenden Befehle enthält: Einen Filterbefehl zum Filtern von SMS-Nachrichten, die für den MR (12) gemäß einem vorbestimmten Kriterium identifiziert werden; einen Weiterleitbefehl zum Weiterleiten einer für den MR (12) identifizierte SMS-Nachricht an eine zusätzliche Adresse; und einen Löschbefehl zum Löschen von SMS-Nachrichten nach Maßgabe eines vorbestimmten Kriteriums.

18. System nach Anspruch 17, bei dem der mindestens eine Alternativ-Abwicklungsbefehl einen Filterbefehl enthält, der ein vorbestimmtes Kriterium spezifiziert, gemäß dem SMS-Nachrichten, die für den MR (12) identifiziert sind, zurückzuweisen sind.

19. System nach Anspruch 18, bei dem der Filterbefehl SMS-Nachrichten zurückweist, die älter als eine vorbestimmte Zeitspanne sind.

20. System nach Anspruch 16 oder Anspruch 17, bei dem der mindestens eine Alternativ-Abwicklungsbefehl ein Weiterleitbefehl zum Weiterleiten einer empfangenen SMS-Nachricht zu einer Mehrzahl verschiedener Adressen beinhaltet.

21. System nach Anspruch 16, bei dem der personalisierte Ordner ein zum Sichern dringender SMS-Nachrichten identifizierter Ordner ist.

22. System nach Anspruch 17, bei dem der mindestens eine Alternativ-Abwicklungsbefehl einen Löschbefehl zum Löschen nicht zugestellter SMS-Nachrichten enthält.

23. System nach Anspruch 22, bei dem nicht zugestellte SMS-Nachrichten nach Ablauf einer vorbestimmten Zeitspanne gelöscht werden.

24. System nach Anspruch 17, bei dem es eine Mehrzahl von Alternativ-Abwicklungsbefehlen gibt, eingerichtet für den MR (12), und wobei ein Inhalt der SMS-Nachricht dazu dient, den passenden Alternativ-Abwicklungsbefehl aus den mehreren Alternativ-Abwicklungsbefehlen auszuwählen.

25. System nach Anspruch 16, bei dem der mindestens eine Alternativ-Abwicklungsbefehl über eine Eingabemaske einer web-Schnittstelle eingereichtet wird.

26. System nach Anspruch 16, bei dem der mindestens einen Alternativ-Abwicklungsbefehl über eine von einem mobilen Kommunikationsgerät gesendete SMS-Nachricht eingereichtet wird.

27. System nach Anspruch 16, weiterhin umfassend ein Modul zum Bestimmen, ob der MR (12) mindestens eine AutoReply-Nachricht für den MR (12) eingerichtet hat.

28. System nach Anspruch 27, bei dem es eine Mehrzahl von AutoReply-Nachrichten gibt, die für den MR (12) eingerichtet sind, wobei die SMS-Nachricht als Schlüssel zur Auswahl einer passenden AutoReply-Nachricht dient.

29. System nach Anspruch 28, bei dem ein Inhalt der SMS-Nachricht als Schlüssel zum Auswählen der passenden AutoReply-Nachricht aus den mehreren AutoReply-Nachrichten dient.

30. System nach Anspruch 29, bei dem die passende AutoReply-Nachricht nach Maßgabe des Umstands ausgewählt wird, ob es sich bei der SMS-Nachricht um eine von einer mobilen Quelle stammende SMS-Nachricht oder eine maschinell erzeugte SMS-Nachricht handelt.

## Revendications

1. Procédé de gestion de messages du service de messages courts (SMS) comprenant les étapes d'identification d'un message SMS pour un récipiendaire de messages (MR) (12), de détermination du fait si le MR (12) a établi au moins une instruction de traitement alternatif pour des messages SMS ; et s'il est déterminé que le MR (12) a établi une instruction de traitement alternatif pour les messages SMS, d'exécution alors de l'instruction de traitement alternatif, le procédé étant **caractérisé en ce que** la, au moins une, instruction de traitement alternatif comprend une instruction de sauvegarde pour sauvegarder des messages SMS dans un dossier personnalisé pour le MR (12).

2. Procédé selon la revendication 1, dans lequel la au moins une, instruction de traitement alternatif comprend additionnellement au moins une instruction de filtrage pour filtrer des messages SMS identifiés pour le MR (12) conformément à un critère prédéterminé ; une instruction d'envoi pour envoyer un message SMS identifié pour le MR (12) à une adresse additionnelle ; et une instruction de suppression pour supprimer les messages SMS conformément à un critère prédéterminé.

3. Procédé selon la revendication 2, dans lequel la au moins une, instruction de traitement alternatif comprend une instruction de filtrage spécifiant un critère prédéterminé par lequel des messages SMS identifiés pour le MR (12) doivent être rejetés.

4. Procédé selon la revendication 2, dans lequel ladite instruction de filtrage rejette des messages SMS qui sont plus anciens qu'une durée prédéterminée.

5. Procédé selon la revendication 1, dans lequel la, au moins une, instruction de traitement alternatif comprend une instruction d'envoi pour envoyer un message SMS reçu à plusieurs adresses différentes.

6. Procédé selon la revendication 1, dans lequel le dossier personnalisé est un dossier identifié pour sauvegarder des messages SMS urgents.

7. Procédé selon la revendication 1, dans lequel la, au moins une, instruction de traitement alternatif comprend une instruction de suppression pour supprimer des messages SMS non délivrés.

8. Procédé selon la revendication 7, dans lequel des messages SMS non délivrés sont supprimés après l'expiration d'une durée prédéterminée.

9. Procédé selon la revendication 1 ou la revendication 2, dans lequel il y a plusieurs instructions de traitement alternatif établies pour le MR (12), et dans lequel le contenu du message SMS est utilisé pour sélectionner l'instruction de traitement alternatif appropriée parmi la pluralité d'instructions de traitement alternatif.

10. Procédé selon la revendication 1, dans lequel la, au moins une, instruction de traitement alternatif est établie par l'intermédiaire d'une forme sur une interface provisionnelle basée sur la toile.

11. Procédé selon la revendication 1, dans lequel la, au moins une, instruction de traitement alternatif est établie par l'intermédiaire d'un message SMS.

12. Procédé selon la revendication 1, comprenant en outre le fait de déterminer si le MR (12) a établi au moins un message d'autoréponse pour le MR (12).

13. Procédé selon la revendication 12, dans lequel il y a plusieurs messages d'autoréponse établis pour le MR (12), et dans lequel le message SMS est utilisé en tant que code pour sélectionner un message d'autoréponse approprié.

14. Procédé selon la revendication 13, dans lequel le contenu du message SMS est utilisé en tant que code pour sélectionner le message d'autoréponse approprié parmi la pluralité de messages d'autoréponse.

15. Procédé selon la revendication 13, dans lequel le message d'autoréponse approprié est sélectionné selon que le message SMS est l'un d'un message SMS d'origine mobile et d'un message SMS d'origine machine.

16. Système pour la gestion de messages du service de messages courts (SMS) comprenant un module pour identifier un message SMS pour un récipiendaire de messages (MR) (12), un module pour déterminer si le MR (12) a établi une instruction de traitement alternatif pour des messages SMS ; et si ledit module détermine que le MR (12) a établi une instruction de traitement alternatif pour les messages SMS, ledit module est alors conçu pour exécuter l'instruction de traitement alternatif, le système étant **caractérisé en ce que** la, au moins une, instruction de traitement alternatif comprend une instruction de sauvegarde pour sauvegarder les messages SMS dans un dossier personnalisé pour le MR (12).

17. Système selon la revendication 16, dans lequel la au moins une, instruction de traitement alternatif comprend additionnellement au moins l'une de : une instruction de filtrage pour filtrer des messages SMS identifiés pour le MR (12) conformément à un critère prédéterminé ; une instruction d'envoi pour envoyer un message SMS identifié pour le MR (12) à une adresse additionnelle ; et une instruction de suppression pour supprimer des messages SMS selon un critère prédéterminé.

18. Système selon la revendication 17, dans lequel la au moins une, instruction de traitement alternatif comprend une instruction de filtrage spécifiant un critère prédéterminé par lequel des messages SMS identifiés pour le MR (12) doivent être rejetés.

19. Système selon la revendication 18, dans lequel ladite instruction de filtrage rejette des messages SMS qui sont plus anciens qu'une durée prédéterminée.

20. Système selon la revendication 16 ou la revendication 17, dans lequel la, au moins une, instruction de traitement alternatif comprend une instruction d'envoi pour envoyer un message SMS reçu à plusieurs adresses différentes.

21. Système selon la revendication 16, dans lequel le dossier personnalisé est un dossier identifié pour sauvegarder des messages SMS urgents.

22. Système selon la revendication 17, dans lequel la, au moins une, instruction de traitement alternatif comprend une instruction de suppression pour supprimer des messages SMS non délivrés.

23. Système selon la revendication 22, dans lequel des messages SMS non délivrés sont supprimés après l'expiration d'une durée prédéterminée.

24. Système selon la revendication 17, dans lequel il y a une pluralité d'instructions de traitement alternatif établies pour le MR (12), et dans lequel le contenu du message SMS est utilisé pour sélectionner l'instruction de traitement alternatif appropriée parmi une pluralité d'instructions de traitement alternatif.

25. Système selon la revendication 16, dans lequel la, au moins une, instruction de traitement alternatif est établie par l'intermédiaire d'une forme sur une interface provisionnelle basée sur la toile.

26. Système selon la revendication 16, dans lequel la, au moins une, instruction de traitement alternatif est établie par l'intermédiaire d'un message SMS transmis depuis un dispositif de communication mobile.

27. Système selon la revendication 16, comprenant en outre un module pour déterminer si le MR (12) a établi au moins un message d'autoréponse pour le MR (12).

28. Système selon la revendication 27, dans lequel il y a une pluralité de messages d'autoréponse établis pour le MR (12), et dans lequel le message SMS est utilisé en tant que code pour sélectionner un message d'autoréponse approprié parmi la pluralité de messages d'autoréponse.

29. Système selon la revendication 28, dans lequel le contenu du message SMS est utilisé en tant que code pour sélectionner le message d'autoréponse approprié parmi la pluralité de messages d'autoréponse.

30. Système selon la revendication 29, dans lequel le message d'autoréponse approprié est sélectionné selon que le message SMS est l'un d'un message SMS d'origine mobile et d'un message SMS d'origine machine.
